# EUROPEAN PATENT SPECIFICATION

(11) **EP 4 335 704 B1**
(45) Date of publication and mention of the grant of the patent: **27.05.2026**
(21) Application number: 22194140.4
(22) Date of filing: 06.09.2022
(51) Int. Cl.: B60R 25/24, G07C 9/00, B60R 25/20

(54) **METHODS FOR PERMITTING AN ACCESS TO A VEHICLE, APPARATUS, VEHICLE AND COMPUTER PROGRAM**
VERFAHREN ZUR ERMÖGLICHUNG EINES ZUGRIFFS AUF EIN FAHRZEUG, VORRICHTUNG, FAHRZEUG UND COMPUTERPROGRAMM
PROCÉDÉS PERMETTANT UN ACCÈS À UN VÉHICULE, APPAREIL, VÉHICULE ET PROGRAMME INFORMATIQUE

(43) Date of publication of application: 13.03.2024
(73) Proprietor: Bayerische Motoren Werke Aktiengesellschaft, 80809 München (DE)
(72) Inventor: Kuelzer, Daniel, 80799 München (DE); Mourad, Alaa, 80995 München (DE)

(56) References cited:
- CN-B- 113 825 104
- CN-U- 213 565 803
- US-B2- 10 906 508

## Description

The present disclosure relates to the field of ultra-wide band ranging. Embodiments relate to methods for permitting an access to a vehicle, an apparatus, a vehicle and a computer program.

To permit user equipment (UE) an access to a vehicle a position of the UE can be used. To determine the position an ultra-wide band (UWB) ranging intent transmitted from the UE can be utilized. The ranging intent may define a trigger for the digital key framework to start UWB ranging. The ranging intent is triggered by the UE (see Car Connectivity Consortium's (CCC) standard release 3, CCC-TS-101). Without a localization via UWB ranging, no change in the central locking system of a vehicle may be possible in advance to a user action, e.g. to permit an access to the vehicle. UWB is the most accurate positioning radio on the market. However, it is strongly affected by shielding and blocking and also has a high energy consumption. This may negatively affect a user's experience. Thus, there may be a demand for permitting an access to a vehicle in an improved way.

CN 213 565 803 U discloses a method for unlocking a car. The car terminal uses the RSSI to prejudge the car distance. When the distance reaches a preset threshold, the Bluetooth connection between the two parties is successful, and the identity authentication of both parties is triggered. After both parties are authenticated, both the car terminal and the key terminal start to trigger the opening of the UWB module, and each UWB module of the car terminal starts to poll the first UWB module that sends a signal to the key terminal, and calculates the user through the ToF principle.

It is therefore a finding that an access to a vehicle can be permitted based on first sensor data obtained by a Bluetooth low energy (BLE) sensor and further based on second sensor data obtained by an UWB sensor. Thus, an access can be permitted based on utilizing both sensor data, e.g., using the BLE sensor data for determining a first position of the UE to activate an UWB sensor to obtain the second sensor data for determining a second position of the UE to permit the access to vehicle.

It is a further finding that a determination of a position of the UE and thus a method for permitting access to a vehicle, can be improved based on combining first sensor data from a BLE sensor with second sensor data from a UWB sensor. Thus, different technologies with different characteristics, e.g., propagation characteristics can be utilized. This way, an impact of blocking and/or shadowing effects caused by obstacle can be reduced.

Embodiments provide a method for permitting an access to a vehicle, comprising obtaining first sensor data indicative of a position of user equipment configured to unlock the vehicle from a Bluetooth low energy sensor and determining a first position of the user equipment relative to the vehicle based on the first sensor data. The method further comprises activating an ultra-wide band sensor based on the determined first position and obtaining second sensor data indicative of a position of the user equipment from the ultra-wide band sensor. The method further comprises determining a second position of the user equipment relative to the vehicle based on the second sensor data and permitting an access to the vehicle based on the second position of the user equipment. This way, an energy consumption of the vehicle can be reduced by activating the BLE sensor if needed, e.g., if the user is at a predefined position relative to the vehicle.

In an example, determining the second position of the user equipment may be further based on the first sensor data. This way, the first sensor data and the second sensor data can be combined to improve the determination of the position of the UE.

In an example, determining the second position of the user equipment based on the first sensor data may be based on channel sounding of a Bluetooth low energy signal received at the Bluetooth low energy sensor. This way, different propagation characteristics of different frequencies can be utilized. Further, the channel sounding of BLE signal may increase a localization/position accuracy of the UE.

In an example, the method may further comprise comparing the first position with a predefined spatial area around the vehicle. The ultra-wide band sensor may be only activated if the first position is within the predefined spatial area around the vehicle. This way, the UWB sensor can be only activated if the user equipment is at predefined positions relative to the vehicle, e.g., next to a door of the vehicle.

In an example, the method may further comprise redetermining the first position based on further first sensor data and deactivating the ultra-wide band sensor if the redetermined first position is outside the predefined spatial area. This way, the UWB sensor can be deactivated if a likelihood of a usage by an owner of the user equipment is decreased.

In an example, the method may further comprise obtaining third sensor data from a third sensor and determining the position of the user equipment may be further based on the third sensor data. This way, the third sensor data, e.g., from an ultrasonic sensor, a Radar sensor, can be utilized to increase a determination of the position of the user equipment, e.g., by determining a position of a person.

Embodiments relate to a method for permitting an access to a vehicle, comprising obtaining first sensor data indicative of a position of user equipment configured to unlock the vehicle from a Bluetooth low energy sensor and obtaining second sensor data indicative of a position of the user equipment from the ultra-wide band sensor. Further, the method comprises determining a position of the user equipment relative to the vehicle based on the first sensor data and the second sensor data and permitting an access to the vehicle based on the determined position of the user equipment. This way permitting the access can be improved by improving the determination of the position of the UE by combining sensor data with different frequencies. Thus, a user experience can be increased and/or a false detection can be reduced.

Examples relate to an apparatus, comprising interface circuitry configured to communicate with a first sensor and a second sensor and processing circuitry configured to perform a method as described above.

Examples relate to a vehicle, comprising an apparatus as described above and a sensor for measuring sensor data.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
- Fig. 1: shows an example of a method;
- Fig. 2: shows another example of a method; and
- Fig. 3: show a block diagram of an example of an apparatus.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

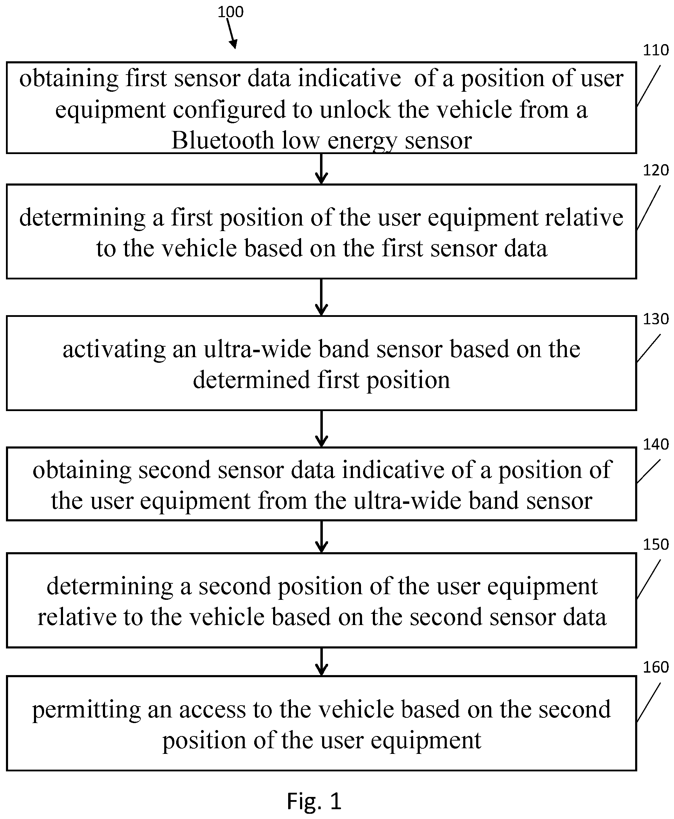

Fig. 1 shows an example of a method 100. The method 100 for permitting an access to a vehicle comprises obtaining 110 first sensor data indicative of a position of user equipment configured to unlock the vehicle from a Bluetooth low energy sensor and determining 120 a first position of the user equipment relative to the vehicle based on the first sensor data. The method 100 further comprises activating 130 an ultra-wide band sensor based on the determined first position and obtaining 140 second sensor data indicative of a position of the user equipment from the ultra-wide band sensor. The method 100 further comprises determining 150 a second position of the user equipment relative to the vehicle based on the second sensor data and permitting 160 an access to the vehicle based on the second position of the user equipment. This way, BLE position measurements can be combined with UWB position measurement. An energy consumption of a BLE sensor may be smaller than that of a UWB sensor. Thus, the UWB sensor may only be activated if the UE is at a predefined position (determined by use of the BLE sensor) such that a likelihood of using the vehicle by an owner of the UE may be increased.

For example, the localization (determining the first position) of the UE might start only on the BLE sensor for energy efficiency. This can be based on UE side information such as BLE relative signal strength index (RSSI) and/or motion measured by the BLE sensor, and/or vehicle side information, e.g., measured with a third sensor as described below. The RSSI may be measured at the communication device. Channel sounding may be performed such that a distance between the communication device and the UE can be determined. If the localization of the UE determined based on the first sensor data is close enough to the vehicle, the UWB sensor can be activated, e.g., to start an UWB ranging session. Thus, a BLE sensor (and optionally passive vehicle sensor) triggered UWB ranging session can be initiated. For example, the UWB sensor utilizing UWB ranging can then be exclusively used for localization (determining the second position), especially if the UE is close to the vehicle.

Obtaining 110 the first sensor data may be performed by receiving the sensor data from a BLE sensor, e.g., a sensor of an infrastructure and/or by measuring the first sensor data using a sensor of the vehicle. The first sensor data may comprise raw data of the sensor. The raw data may be evaluated by a processing circuitry comprised by the vehicle, e.g., by a control unit. Alternatively, the first sensor data may comprise evaluated data, e.g., position data, distance data, which is indicative of the first position of the UE.

Determining 120 the first position may be performed by a processing circuitry of the vehicle, e.g., by a control unit. Based on the determined first position the UWB sensor may be activated 130, e.g., by the processing circuitry. For example, the processing circuitry may generate an activation signal comprising data indicative to activate the UWB sensor.

Obtaining 140 the second sensor data may be performed by receiving the sensor data from a UWB sensor, e.g., a sensor of an infrastructure and/or by measuring the second sensor data using a sensor of the vehicle. The second sensor data may comprise raw data of the sensor. The raw data may be evaluated by a processing circuitry comprised by the vehicle, e.g., by a control unit. Alternatively, the second sensor data may comprise evaluated data, e.g., position data, distance data, which is indicative of the second position of the UE.

Determining 150 the second position may be performed by a processing circuitry of the vehicle, e.g., by a control unit. Based on the determined second position an access to the vehicle may be permitted 160. For example, the processing circuitry may generate an permitting signal comprising data indicative to permit an access to the vehicle.

In an example, determining the second position of the user equipment may be further based on the first sensor data. Thus, different frequencies of the different sensors can be utilized to improve the determination of the second position. For example, a direction estimation (e.g., Ranging) can be performed based on BLE. Several method could be utilized, e.g., passive (decreased accuracy) such like a signal power (RSSI), a beacon location sharing, active (accuracy increased in comparison to passive) such like Time of Flight (ToF), Phase Slope/Accumulation or a combination thereof. Further, a direction finding (in 2D or 3D) can be performed such like Angle of Departure (AoD), Indoor Positioning, Angle of Arrival (AoA), Asset Tracking or channel sounding can be used. This way, the determination of the second position can be increased. For example, combination of UWB ranging session with HADM may result in the highest localization performance, e.g., the most accurate determined second position.

In an example, determining the second position of the user equipment based on the first sensor data may be based on channel sounding of a Bluetooth low energy signal received at the Bluetooth low energy sensor. Thus, a further improvement of the determination of the second position could be achieved. For example, known UWB multi-input multi-output (MIMO) channel sounding can be used in a similar way for BLE. For example, mode 2 as defined for BLE MIMO channel sounding based on a phase of the signal can be utilized to determine the second position of the UE.

In some scenarios, UWB based localization may fail due to shielding and/or blocking. By combining the first sensor data and the second sensor data the determination of the second position of the UE can be improved, especially if for UWB shielding and/or blocking a problem may arise. Further, some localization techniques, e.g., a Kalman filter, may benefit from additional sensor data, such like the first sensor data. For example, that the BLE sensor(s) might be positioned in different locations of the vehicle to UWB sensor(s). Thus, the BLE sensor(s) may not be affected by an obstacle, which may affect the UWB sensor(s). Thus, by combining the first sensor data, especially including BLE channel sounding measurements a measurement noise can be reduced, e.g., to account for a larger distance/position measurement error of the UWB sensor. Further, combining the BLE sensor and the UWB sensor can increase the number of sensors that detect the UE. In this way, the determination of the second position can be improved by the increased number of sensors used for detecting the UE.

In an example, the method may further comprise comparing the first position with a predefined spatial area around the vehicle. The ultra-wide band sensor may be only activated if the first position is within the predefined spatial area around the vehicle. Thus, the UWB sensor may be only activated if a likelihood of a use of the vehicle by an owner of the UE is increased. For example, the spatial area around the vehicle may define an area from which the user may reach within a certain time and/or with a predefined number of steps a door of the vehicle. The spatial area may be within a distance of at most 3 steps of a person or 2 steps of a person to a door of the vehicle, for example.

In an example, the method may further comprise redetermining the first position based on further first sensor data and deactivating the ultra-wide band sensor if the redetermined first position is outside the predefined spatial area. For example, the UE may move away from the vehicle. Thus, an activated UWB sensor can be deactivated again to reduce an energy consumption.

In an example, the method may further comprise obtaining third sensor data from a third sensor and determining the position of the user equipment may be further based on the third sensor data. For example, the third sensor can be a Lidar sensor, a Radar sensor, an ultrasonic transducer. Thus, further sensor data can be used to improve the determination of the second sensor position.

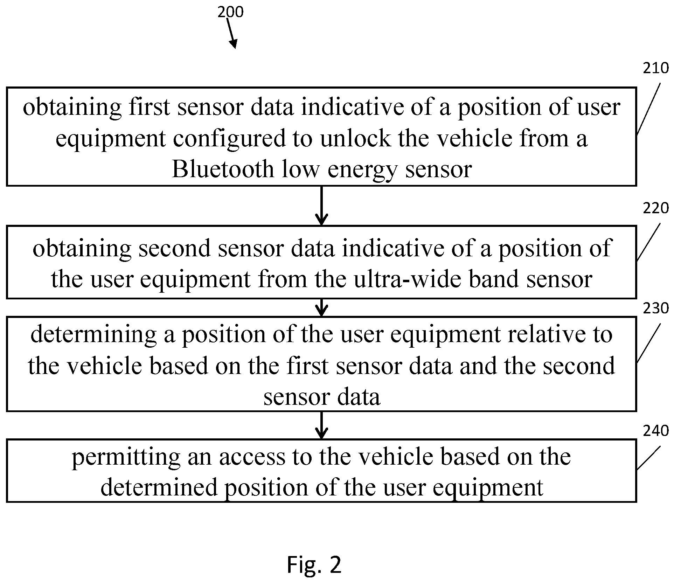

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200. The method 200 for permitting an access to a vehicle comprises obtaining 210 first sensor data indicative of a position of user equipment configured to unlock the vehicle from a Bluetooth low energy sensor and obtaining 220 second sensor data indicative of a position of the user equipment from the ultra-wide band sensor. Further, the method 200 comprises determining 230 a position of the user equipment relative to the vehicle based on the first sensor data and the second sensor data and permitting 240 an access to the vehicle based on the determined position of the user equipment. This way, the determination of the position of the UE can be improved. Combining the first sensor data and the second sensor data has been described in more detail with reference to Fig. 1.

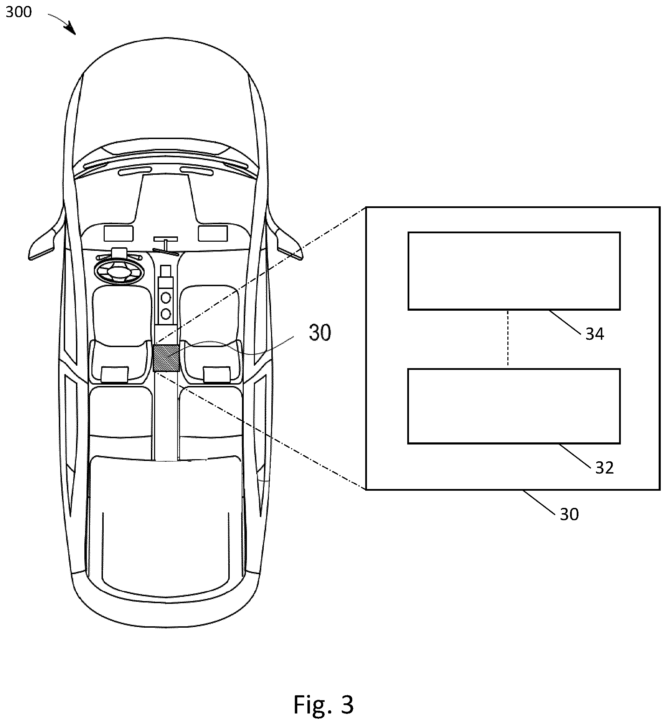

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3).

Fig. 3 shows an example of a block diagram of an apparatus 30 for a vehicle 300. The apparatus comprises interface circuitry 32 configured to communicate with a senor, e.g., with a BLE sensor or a UWB sensor and processing circuitry 34 configured to perform a method as described above, e.g., with reference to Fig. 1 and/or Fig. 2. For example the apparatus may be comprised the vehicle 300, e.g., by a control unit of the vehicle 300.

For example, the vehicle 300 may be a land vehicle, such a road vehicle, a car, an automobile, an off-road vehicle, a motor vehicle, a bus, a robo-taxi, a van, a truck or a lorry. Alternatively, the vehicle 300 may be any other type of vehicle, such as a train, a subway train, a boat or a ship. For example, the proposed concept may be applied to public transportation (trains, bus) and future means of mobility (e.g., robo-taxis).

As shown in Fig. 3 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 3 may comprise one or more optional additional features corresponding to one or more aspects mentioned in connection with the proposed concept or one or more examples described above (e.g., Fig. 1 - 2).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

## Claims

1. A method (100) for permitting an access to a vehicle, comprising
obtaining (110; 210) first sensor data indicative of a position of user equipment configured to unlock the vehicle from a Bluetooth low energy sensor;
obtaining (140; 220) second sensor data indicative of a position of the user equipment from an ultra-wide band sensor;
determining (230) a position of the user equipment relative to the vehicle based on the first sensor data and the second sensor data by combining the first sensor data from the Bluetooth low energy sensor with the second sensor data from the ultra-wide band sensor; and
permitting (160; 240) an access to the vehicle based on the second position of the user equipment.

2. The method (100) according to claim 1, wherein
determining (230) the position of the user equipment comprises:
determining (120) a first position of the user equipment relative to the vehicle based on the first sensor data;
activating (130) an ultra-wide band sensor based on the determined first position; and determining (150) a second position of the user equipment relative to the vehicle based on the
second sensor data and the first sensor data.

3. The method (100) according to any one of the preceding claims, wherein
determining the position or the second position of the user equipment based on the first sensor data is based on channel sounding of a Bluetooth low energy signal received at the Bluetooth low energy sensor.

4. The method (100) according to claim 2 or 3, further comprising
comparing the first position with a predefined spatial area around the vehicle and wherein
the ultra-wide band sensor is only activated if the first position is within the predefined spatial area around the vehicle.

5. The method (100) according to claim 4, further comprising:
redetermining the first position based on further first sensor data; and
deactivating the ultra-wide band sensor if the redetermined first position is outside the predefined spatial area.

6. The method (100) according to any of the preceding claims, further comprising:
obtaining third sensor data from a third sensor; and
determining the position or the second position of the user equipment is further based on the third sensor data.

7. An apparatus (30), comprising:
interface circuitry (32) configured to communicate with a first sensor and a second sensor; and
processing circuitry (34) configured to perform a method (100) according to any of the preceding claims.

8. A vehicle (50), comprising:
an apparatus (30) according to claim 7;
a Bluetooth low energy sensor for measuring first sensor data; and
an ultra-wide band sensor for measuring second sensor data.

9. A computer program having a program code for performing the method (100; 200) processing circuitry (34) configured to perform a method (100; 200) according to any of claim 1 - 6, when the computer program is executed on an apparatus according to claim 7.

## Patentansprüche

1. Verfahren (100) zum Erlauben eines Zugangs zu einem Fahrzeug, umfassend Erfassen (110; 210) von ersten Sensordaten, die eine Position von Benutzerausrüstung anzeigen, die zum Entriegeln des Fahrzeugs konfiguriert ist, von einem Bluetooth-Low-Energy-Sensor;
Erfassen (140; 220) von zweiten Sensordaten, die eine Position der Benutzerausrüstung anzeigen, von einem Ultrabreitband-Sensor;
Bestimmen (230) einer Position der Benutzerausrüstung relativ zu dem Fahrzeug basierend auf den ersten Sensordaten und den zweiten Sensordaten durch Kombinieren der ersten Sensordaten von dem Bluetooth-Low-Energy-Sensor mit den zweiten Sensordaten von dem Ultrabreitband-Sensor; und
Erlauben (160; 240) eines Zugangs zu dem Fahrzeug basierend auf der zweiten Position der Benutzerausrüstung.

2. Verfahren (100) nach Anspruch 1, wobei
Bestimmen (230) der Position der Benutzerausrüstung umfasst:
Bestimmen (120) einer ersten Position der Benutzerausrüstung relativ zu dem Fahrzeug basierend auf den ersten Sensordaten;
Aktivieren (130) eines Ultrabreitband-Sensors basierend auf der bestimmten ersten Position; und
Bestimmen (150) einer zweiten Position der Benutzerausrüstung relativ zu dem Fahrzeug basierend auf den zweiten Sensordaten und den ersten Sensordaten.

3. Verfahren (100) nach einem der vorhergehenden Ansprüche, wobei
Bestimmen der Position oder der zweiten Position der Benutzerausrüstung basierend auf den ersten Sensordaten auf einem Channel Sounding eines Bluetooth-Low-Energy-Signals basiert, das an dem Bluetooth-Low-Energy-Sensor empfangen wird.

4. Verfahren (100) nach Anspruch 2 oder 3, ferner umfassend
Vergleichen der ersten Position mit einem vordefinierten räumlichen Bereich um das Fahrzeug, und wobei
der Ultrabreitband-Sensor nur aktiviert wird, wenn die erste Position innerhalb des vordefinierten räumlichen Bereichs um das Fahrzeug liegt.

5. Verfahren (100) nach Anspruch 4, ferner umfassend:
Neubestimmen der ersten Position basierend auf weiteren ersten Sensordaten; und
Deaktivieren des Ultrabreitband-Sensors, wenn die neubestimmte erste Position außerhalb des vordefinierten räumlichen Bereichs liegt.

6. Verfahren (100) nach einem der vorhergehenden Ansprüche, ferner umfassend:
Erfassen von dritten Sensordaten von einem dritten Sensor; und
Bestimmen der Position oder der zweiten Position der Benutzerausrüstung ferner basierend auf den dritten Sensordaten.

7. Vorrichtung (30), umfassend:
Schnittstellenschaltung (32), die zum Kommunizieren mit einem ersten Sensor und einem zweiten Sensor konfiguriert ist; und
Verarbeitungsschaltung (34), die zum Durchführen eines Verfahrens (100) nach einem der vorhergehenden Ansprüche konfiguriert ist.

8. Fahrzeug (50), umfassend:
eine Vorrichtung (30) nach Anspruch 7;
einen Bluetooth-Low-Energy-Sensor zum Messen von ersten Sensordaten; und
einen Ultrabreitband-Sensor zum Messen von zweiten Sensordaten.

9. Computerprogramm mit einem Programmcode zum Durchführen des Verfahrens (100; 200) Verarbeitungsschaltung (34), die zum Durchführen eines Verfahrens (100; 200) nach einem der Ansprüche 1 - 6 konfiguriert ist, wenn das Computerprogramm auf einer Vorrichtung nach Anspruch 7 ausgeführt wird.

## Revendications

1. Procédé (100) pour permettre un accès à un véhicule, comprenant l'obtention (110; 210) de premières données de capteur indiquant une position d'un équipement utilisateur configuré pour déverrouiller le véhicule à partir d'un capteur Bluetooth à basse énergie;
l'obtention (140; 220) de deuxièmes données de capteur indiquant une position de l'équipement utilisateur à partir d'un capteur à bande ultra-large;
la détermination (230) d'une position de l'équipement utilisateur par rapport au véhicule sur la base des premières données de capteur et des deuxièmes données de capteur en combinant les premières données de capteur du capteur Bluetooth à basse énergie avec les deuxièmes données de capteur du capteur à bande ultra-large; et
la permission (160; 240) d'un accès au véhicule sur la base de la deuxième position de l'équipement utilisateur.

2. Procédé (100) selon la revendication 1, dans lequel
la détermination (230) de la position de l'équipement utilisateur comprend:
la détermination (120) d'une première position de l'équipement utilisateur par rapport au véhicule sur la base des premières données de capteur;
l'activation (130) d'un capteur à bande ultra-large sur la base de la première position déterminée; et
la détermination (150) d'une deuxième position de l'équipement utilisateur par rapport au véhicule sur la base des deuxièmes données de capteur et des premières données de capteur.

3. Procédé (100) selon l'une quelconque des revendications précédentes, dans lequel la détermination de la position ou de la deuxième position de l'équipement utilisateur sur la base des premières données de capteur est basée sur un sondage de canal d'un signal Bluetooth à basse énergie reçu au niveau du capteur Bluetooth à basse énergie.

4. Procédé (100) selon la revendication 2 ou 3, comprenant en outre
la comparaison de la première position avec une zone spatiale prédéfinie autour du véhicule et dans lequel
le capteur à bande ultra-large est activé uniquement si la première position se trouve dans la zone spatiale prédéfinie autour du véhicule.

5. Procédé (100) selon la revendication 4, comprenant en outre:
la redétermination de la première position sur la base de premières données de capteur supplémentaires; et
la désactivation du capteur à bande ultra-large si la première position redéterminée se trouve en dehors de la zone spatiale prédéfinie.

6. Procédé (100) selon l'une quelconque des revendications précédentes, comprenant en outre:
l'obtention de troisièmes données de capteur à partir d'un troisième capteur; et
la détermination de la position ou de la deuxième position de l'équipement utilisateur est en outre basée sur les troisièmes données de capteur.

7. Appareil (30), comprenant:
un circuit d'interface (32) configuré pour communiquer avec un premier capteur et un deuxième capteur; et
un circuit de traitement (34) configuré pour exécuter un procédé (100) selon l'une quelconque des revendications précédentes.

8. Véhicule (50), comprenant:
un appareil (30) selon la revendication 7;
un capteur Bluetooth à basse énergie pour mesurer des premières données de capteur; et
un capteur à bande ultra-large pour mesurer des deuxièmes données de capteur.

9. Programme d'ordinateur ayant un code de programme pour exécuter le procédé (100; 200) circuit de traitement (34) configuré pour exécuter un procédé (100; 200) selon l'une quelconque des revendications 1 - 6, lorsque le programme d'ordinateur est exécuté sur un appareil selon la revendication 7.
